# EUROPEAN PATENT APPLICATION

(11) **EP 4 851 314 A1**
(43) Date of publication of application: **09.12.2026**
(21) Application number: 24922062.5
(22) Date of filing: 27.08.2024
(51) Int. Cl.: C22B 3/16, B01J 20/22, C22B 3/24, C22B 7/00, C22B 11/00

(54) **METAL DISSOLVING SOLUTION AND METHOD FOR RECOVERING GOLD**

(30) Priority: 30.01.2024 JP 2024012127
(71) Applicant: Daicel Corporation, Osaka-shi, Osaka 530-0011 (JP)
(72) Inventor: SAKATA, Yumi, Tokyo 108-8230 (JP); SEKI, Yoshie, Tokyo 108-8230 (JP); WATANABE, Megumi, Tokyo 108-8230 (JP)
(74) Representative: Grünecker Patent- und Rechtsanwälte PartG mbB
(86) International application number: PCT/JP2024/030511
(87) International publication number: WO 2025/163950

(57) **Abstract**

A metal dissolving solution contains a hydrophilic organic solvent, a chlorine compound, and an oxidizing agent. The chlorine compound has a property of generating chloride ions (Cl⁻) by being dissolved in the hydrophilic organic solvent. A method for recovering gold includes: (1) dissolving gold in the metal dissolving solution to obtain a composition containing the metal dissolving solution and dissolved gold; (2) contacting the composition with an adsorbent to allow the dissolved gold to be adsorbed by the adsorbent, thereby obtaining a gold-containing adsorbent; and (3) separating the gold-containing adsorbent and the composition to recover gold in the gold-containing adsorbent. The method for recovering gold may further include: (4) further dissolving gold in a composition obtained after the gold-containing adsorbent is separated to reuse the metal dissolving solution in the composition.

## Description

### Technical Field

The present disclosure relates to a metal dissolving solution and a method for recovering gold using the metal dissolving solution.

### Background Art

In recent years, many electric and electronic devices such as portable phones have been used and discarded. Various metals such as noble metals and rare metals are used in these electric and electronic devices. For this reason, the discarded electric and electronic devices are called "urban mines" for collecting noble metals and are attracting attention. In particular, gold (Au) is a material of a bonding wire for connecting an electrode of an IC chip to a lead frame, and is used in a large amount. Therefore, a technique for efficiently recovering gold from an urban mine is required.

To recover noble metals from used equipment such as urban mines, it is necessary to first elute the noble metals in the used equipment using a metal dissolving solution. In recent years, as a solvent for dissolving gold (metal dissolving solution), "organic aqua regia" containing an organic solvent and copper halide has been known. In the organic aqua regia, the copper halide as an oxidizing agent contributes to the dissolution of gold. A method, in which gold contained in used electric and electronic devices is eluted into the organic aqua regia, and then the gold in the solution is recovered, has been proposed. In addition, an "etching liquid" composed of an organic solvent and a halogen as a simple substance is known for etching a semiconductor or the like containing a noble metal. In this etching liquid, iodine as an oxidizing agent contributes to the dissolution of gold.

For example, JP 6196662 B (Patent Document 1) proposes a method for recovering gold, including: dissolving gold in a solvent system containing a copper halide and an aprotic polar solvent, and adding a reducing agent to the solvent system with gold dissolved therein to precipitate a noble metal. JP H02-310326 A (Patent Document 2) discloses a technique in which a porous granular resin is impregnated with dibutyl carbitol or methyl isobutyl ketone as an organic solvent, and then a hydrochloric acid solution containing gold is allowed to pass through the porous granular resin layer to selectively extract gold into dibutyl carbitol or methyl isobutyl ketone. JP 2002-194450 A (Patent Document 3) proposes a method for selectively adsorbing a platinum group noble metal from an organic solvent solution using an adsorbent containing nicotinamide as an active ingredient.

### Citation List

### Patent Document

Patent Document 1: JP 6196662 B
Patent Document 2: JP H02-310326 A
Patent Document 3: JP 2002-194450 A

### Summary of Invention

### Technical Problem

Patent Document 1 does not disclose use of an adsorbent in the recovery of dissolved gold. Further, in Patent Document 1, a reducing agent such as water or ascorbic acid is added to precipitate gold dissolved in organic aqua regia. Addition of the reducing agent completely removes the oxidizing agent contributing to the dissolution of gold. Therefore, it is very costly to reuse, as a gold dissolving solution, the organic aqua regia from which gold has been recovered. In the technique disclosed in Patent Document 2, re-extraction with a dilute acid is required for recovering gold extracted into a metal extraction material, which requires time and labor. Patent Document 2 does not disclose the finding that a solvent system containing an organic solvent is used for dissolving a noble metal. Nicotinamide, an active ingredient of Patent Document 3, is itself soluble in an organic solvent, and therefore needs to be supported on an insoluble carrier such as activated carbon. Although nicotinamide has excellent selectivity for platinum group noble metals, it cannot be applied to the recovery of gold.

A metal dissolving solution containing an organic solvent as a constituent component has not yet been proposed that offers excellent solubility of a noble metal and that can adsorb the noble metal at a high adsorption percentage in recovering a dissolved noble metal by an adsorbent. In addition, a method for recovering gold by repeatedly using the metal dissolving solution has not been proposed yet.

An object of the present disclosure is to provide a metal dissolving solution capable of dissolving a noble metal, the metal dissolving solution allowing the noble metal dissolved in the metal dissolving solution to be efficiently adsorbed by an adsorbent. Another object of the present disclosure is to provide a method for selectively and efficiently recovering gold using the metal dissolving solution. Yet another object of the present disclosure is to provide a method for recovering gold by repeatedly using the metal solution.

### Solution to Problem

The metal dissolving solution according to the present disclosure contains a hydrophilic organic solvent, a chlorine compound, and an oxidizing agent. The chlorine compound has a property of generating chloride ions (Cl⁻) when dissolved in a hydrophilic organic solvent.

A method for recovering gold according to the present disclosure includes:
(1) dissolving gold in the metal dissolving solution described above to obtain a composition containing the metal dissolving solution and dissolved gold;
(2) contacting the composition with an adsorbent to allow the dissolved gold to be adsorbed by the adsorbent, thereby obtaining a gold-containing adsorbent; and
(3) separating the gold-containing adsorbent and the composition to recover gold in the gold-containing adsorbent. The method for recovering gold may further include:
(4) further dissolving gold in a composition obtained after the gold-containing adsorbent is separated to reuse the metal dissolving solution in the composition.

### Advantageous Effects of Invention

The metal dissolving solution according to the present disclosure offers excellent solubility of a noble metal. The noble metal dissolved in the metal dissolving solution is easily adsorbed by the adsorbent by contact with the adsorbent. With the method for recovering gold according to the present disclosure using the metal dissolving solution, dissolved gold can be efficiently recovered using an adsorbent. Furthermore, with the method for recovering gold according to the present disclosure, even a used metal dissolving solution offers excellent solubility of gold. In the method for recovering gold, the metal dissolving solution can be repeatedly used.

### Description of Embodiments

Hereinafter, an example of a preferred embodiment will be specifically described. Each of the configurations, combinations thereof, and the like in each of the embodiments is an example, and additions, omissions, substitutions, and other changes of the configurations may be made as appropriate without departing from the spirit of the present disclosure. The present disclosure is not limited by the embodiments and is limited only by the claims. Each aspect disclosed in the present specification can be combined with any other feature disclosed herein.

The numerical range of each element disclosed in the present specification can be freely combined with the numerical range of another element. For example, the limitation of the numerical range of the content of the chlorine compound in the metal dissolving solution can be combined with the limitation of the numerical range of the amount of the oxidizing agent. The numerical range of each element disclosed in the present specification may be a range obtained by freely combining the upper limit value and the lower limit value thereof.

In the present specification, "from X to Y" indicating a range means "X or more and Y or less"; "ppm" means "mass ppm"; and "%" means "mass% (wt.%)". In addition, the "mass%" refers to so-called weight percent, and does not mean mass concentration. In addition, "X' and/or Y'" has the same meaning as "at least one selected from the group consisting of X' and Y', and means to include all of [1] to [3] of "[1] only X', [2] only Y', [3] both X' and Y'. In the present specification, all test temperatures are room temperatures (20°C ± 5°C) unless otherwise noted.

### Metal dissolving solution

The metal dissolving solution of the present disclosure contains a hydrophilic organic solvent and a chlorine compound. The chlorine compound has a property of generating chloride ions (Cl⁻) by being dissolved in water. Specifically, the metal dissolving solution of the present disclosure is a solution containing a chlorine compound as a solute and a hydrophilic organic solvent as a solvent.

The metal dissolving solution of the present disclosure can dissolve a noble metal. Specifically, the metal dissolving solution of the present disclosure is a liquid containing a hydrophilic organic solvent and is capable of dissolving a noble metal. Here, the "noble metal" means gold (Au), silver (Ag), platinum (Pt), palladium (Pd), iridium (Ir), rhodium (Rh), ruthenium (Ru), and osmium (Os), but the target of the metal dissolving solution of the present disclosure is not limited to these elemental noble metals. That is, the metal dissolving solution of the present disclosure can dissolve an elemental noble metal selected from the group consisting of elemental gold, silver, platinum, palladium, iridium, rhodium, ruthenium, and osmium, and an alloy of noble metals including at least one selected from the group consisting of gold, silver, platinum, palladium, iridium, rhodium, ruthenium, and osmium. Among these, the metal dissolving solution of the present disclosure is suitable for dissolving gold.

By dissolving the noble metal with the metal dissolving solution of the present disclosure, a composition containing the dissolved noble metal and the metal dissolving solution is obtained. When an adsorbent is charged into the composition, the dissolved noble metal is adsorbed by the adsorbent. Consequently, the noble metal can be recovered. That is, the metal dissolving solution of the present disclosure can be used for recovering a noble metal by an adsorbent. In particular, the metal dissolving solution of the present disclosure is suitable for dissolving gold and recovering gold by an adsorbent. Furthermore, with the metal dissolving solution, after a noble metal is recovered using the adsorbent, a noble metal can be further dissolved. The metal dissolving solution of the present disclosure can be repeatedly used in a noble metal recovery cycle including dissolution of a noble metal and adsorption (recovery) of the dissolved noble metal by an adsorbent without separately performing a purification treatment, a regeneration treatment, or the like. With the metal dissolving solution of the present disclosure, a noble metal can be recovered simply and efficiently.

### Hydrophilic organic solvent

The hydrophilic organic solvent is one of the main constituent components of the metal dissolving solution of the present disclosure. In the present specification, the "organic solvent" means an organic compound that is liquid at normal temperature, and may be referred to as an "organic dissolving agent". Here, the "liquid state" means a state having fluidity at normal temperature (from 15 to 35°C). Specifically, the organic solvent means an organic compound having fluidity at normal temperature and normal pressure (for example, from 15 to 35°C, 1 atm). The "hydrophilic organic solvent" means an organic solvent having a property of being miscible with water or a property of being dissolved in water.

As the hydrophilic organic solvent that is a constituent component of the metal dissolving solution, a polar solvent is preferable. It may be an aprotic polar solvent or a protic polar solvent.

From another viewpoint, the hydrophilic organic solvent may be an organic solvent having a heteroatom selected from the group consisting of a nitrogen atom (N), a sulfur atom (S), and an oxygen atom (O).

Specific examples of the hydrophilic organic solvent include N-methylpyrrolidone, acetonitrile, dimethyl sulfoxide (DMSO), dimethylformamide (DMF), acetone, tetrahydrofuran, propylene carbonate, methanol, ethanol, 2-propanol, n-butanol, tert-butyl alcohol, and benzyl alcohol. The type of the hydrophilic organic solvent can be selected according to the type of the noble metal to be dissolved. From the viewpoint of easily obtaining the effects of the present disclosure, a preferable hydrophilic organic solvent is at least one selected from the group consisting of N-methylpyrrolidone, acetonitrile, and methanol.

The content of the hydrophilic organic solvent in the metal dissolving solution may be from 5 mass% to 98 mass%, from 5 mass% to 97 mass%, from 5 mass% to 95 mass%, from 5 mass% to 90 mass%, from 5 mass% to 80 mass%, from 10 mass% to 98 mass%, from 10 mass% to 97 mass%, from 10 mass% to 95 mass%, from 10 mass% to 90 mass%, from 10 mass% to 80 mass%, from 20 mass% to 98 mass%, from 20 mass% to 97 mass%, from 20 mass% to 95 mass%, from 20 mass% to 90 mass%, from 20 mass% to 80 mass%, from 25 mass% to 98 mass%, from 25 mass% to 97 mass%, from 25 mass% to 95 mass%, from 25 mass% to 90 mass%, from 25 mass% to 80 mass%, from 30 mass% to 98 mass%, from 30 mass% to 97 mass%, from 30 mass% to 95 mass%, from 30 mass% to 90 mass%, or from 30 mass% to 80 mass% with respect to the total amount of the metal dissolving solution. The metal dissolving solution containing the hydrophilic organic solvent in the above range offers excellent solubility of a noble metal.

### Chlorine compound

The chlorine compound is one of the main constituent components of the metal dissolving solution of the present disclosure. As described above, the "chlorine compound" in the present specification is defined as a compound that is dissolved in the hydrophilic organic solvent described above to generate chloride ions (Cl⁻).

The chlorine compound is preferably at least one selected from the group consisting of an alkali metal chloride, an alkaline earth metal chloride, a transition metal chloride, and an amine hydrochloride. Examples of the alkali metal chloride include lithium chloride (LiCl), potassium chloride (KCl), sodium chloride (NaCl). Examples of the alkaline earth metal chlorides include calcium chloride (CaCl₂), magnesium chloride (MgCl₂), barium chloride (BaCl₂), and strontium chloride (SrCl₂). Examples of the first transition metal chlorides include copper chloride (CuCl₂), iron chloride (FeCl₃), and manganese chloride (MnCl₂). Examples of the amine hydrochloride include trimethylamine hydrochloride, triethylamine hydrochloride, and triethanolamine hydrochloride. The alkali metal chloride or amine hydrochloride is more preferable, and at least one selected from the group consisting of sodium chloride and trimethylamine hydrochloride is still more preferable.

The content of the chlorine compound in the metal dissolving solution may be from 0.001 mass% to 20 mass%, from 0.001 mass% to 15 mass%, from 0.001 mass% to 10 mass%, from 0.001 mass% to 5 mass%, from 0.005 mass% to 20 mass%, from 0.005 mass% to 15 mass%, from 0.005 mass% to 10 mass%, from 0.005 mass% to 5 mass%, from 0.01 mass% to 20 mass%, from 0.01 mass% to 15 mass%, from 0.01 mass% to 10 mass%, from 0.01 mass% to 5 mass%, from 0.05 mass% to 20 mass%, from 0.05 mass% to 15 mass%, from 0.05 mass% to 10 mass%, from 0.05 mass% to 5 mass%, from 0.5 mass% to 20 mass%, from 0.5 mass% to 15 mass%, from 0.5 mass% to 10 mass%, or from 0.5 mass% to 5 mass% with respect to the total amount of the metal dissolving solution. The noble metal dissolved in the metal dissolving solution containing the chlorine compound in the above range is efficiently adsorbed by an adsorbent. With the metal dissolving solution, an adsorbent can be used for recovering the dissolved noble metal. In addition, in a case where the metal dissolving solution of the present disclosure is used for etching of a semiconductor substrate or the like, the chlorine compound contained in the range does not excessively affect materials other than an etching target.

### Oxidizing agent

The oxidizing agent is one of the main constituent components of the metal dissolving solution of the present disclosure. When the metal dissolving solution contains an oxidizing agent, the solubility of the noble metal is improved. Preferably, the metal dissolving solution of the present disclosure contains an oxidizing agent other than copper halide.

Examples of the oxidizing agent contained in the metal dissolving solution include a halogen molecule (X₂, X = I, Br, Cl, or the like) such as an iodine molecule (I₂), a bromine molecule (Br₂), and a chlorine molecule (Cl₂). An iodine molecule (I₂) and/or a chlorine molecule (Cl₂) are more preferable, and an iodine molecule (I₂) is still more preferable.

The content of the oxidizing agent in the metal dissolving solution may be from 0.01 mass% to 20 mass%, from 0.01 mass% to 18 mass%, from 0.01 mass% to 15 mass%, from 0.01 mass% to 10 mass%, from 0.1 mass% to 20 mass%, from 0.1 mass% to 18 mass%, from 0.1 mass% to 15 mass%, from 0.1 mass% to 10 mass%, from 1.0 mass% to 20 mass%, from 1.0 mass% to 18 mass%, from 1.0 mass% to 15 mass%, or from 1.0 mass% to 10 mass% with respect to the total amount of the metal dissolving solution. The metal dissolving solution containing the oxidizing agent in the above range is easily used for dissolving the noble metal and offers excellent solubility.

### Other additives

When the metal dissolving solution contains a halogen molecule (X₂, X = I, Br, Cl, or the like) as the oxidizing agent, the metal dissolving solution may further contain a halide. In the metal dissolving solution containing the halide, halogen consumed as the oxidizing agent in dissolution of the noble metal is replenished. This maintains the solubility of the noble metal. A halide containing the same type of halogen as the halogen molecule serving as the oxidizing agent is preferable.

For example, when the metal dissolving solution contains an iodine molecule (I₂) as the oxidizing agent, a metal dissolving solution further containing an iodine compound is preferable. The iodine compound is preferably at least one selected from the group consisting of an alkali metal iodide, an alkaline earth metal iodide, and an ammonium iodide. Examples of the alkali metal iodide include lithium iodide (LiI), potassium iodide (KI), and sodium iodide (NaI). Examples of the alkaline earth metal iodide include calcium iodide (CaI₂), magnesium iodide (MgI₂), barium iodide (BaI₂), and strontium iodide (SrI₂). In the present specification, "ammonium" means ammonium (NH₄⁺) and organic ammonium (quaternary ammonium, NR₄⁺, R = hydrocarbon group). Examples of the ammonium iodide include ammonium iodide and tetrabutylammonium iodide.

When the metal dissolving solution contains a halide, the content of the halide may be from 0.01 mass% to 20 mass%, from 0.01 mass% to 18 mass%, from 0.01 mass% to 15 mass%, from 0.01 mass% to 10 mass%, from 0.1 mass% to 20 mass%, from 0.1 mass% to 18 mass%, from 0.1 mass% to 15 mass%, from 0.1 mass% to 10 mass%, from 1.0 mass% to 20 mass%, from 1.0 mass% to 18 mass%, from 1.0 mass% to 15 mass%, from 1.0 mass% to 10 mass%, from 5.0 mass% to 20 mass%, from 5.0 mass% to 18 mass%, from 5.0 mass% to 15 mass%, or from 5.0 mass% to 10 mass% with respect to the total amount of the metal dissolving solution. In the metal dissolving solution containing the halide in the above range, excellent solubility of a noble metal is maintained for a long period of time.

As long as the effects of the present disclosure are obtained, the metal dissolving solution may or may not contain water. When the metal dissolving solution contains water, the amount of water may be more than 0 mass% and less than 70 mass%, more than 0 mass% and 65 mass% or less, more than 0 mass% and 60 mass or less, more than 0 mass% and 55 mass% or less, 1 mass% or more and less than 70 mass%, from 1 mass% to 65 mass%, from 1 mass% to less than 60 mass%, from 1 mass% to 55 mass%, 5 mass% or more and less than 70 mass%, from 5 mass% to 65 mass%, from 5 mass% to less than 60 mass%, from 5 mass% to 55 mass%, 10 mass% or more and less than 70 mass%, from 10 mass% to 65 mass%, from 10 mass% to less than 60 mass%, from 10 mass% to 55 mass% with respect to the total amount of the metal dissolving solution. The metal dissolving solution containing water in the above range offers excellent solubility of a noble metal.

### Applications

The metal dissolving solution of the present disclosure can be used for application of dissolving a noble metal in place of known aqua regia. In particular, the metal dissolving solution of the present disclosure can be used for application of dissolving gold. For example, it is used for recovery of noble metals from used electric and electronic devices and extraction of noble metals from ores, and the like. In addition, the metal dissolving solution of the present disclosure can also be used as an etching liquid for semiconductor manufacturing. For example, in the manufacturing process of a semiconductor device, the metal dissolving solution of the present disclosure can be used to form a fine pattern by etching the surface of a workpiece formed of a material containing a noble metal.

### Method for recovering gold

As described above, the metal dissolving solution of the present disclosure offers excellent solubility of, particularly, gold. The metal dissolving solution of the present disclosure is suitably used in a method for recovering gold.

That is, in a first embodiment, the method for recovering gold of the present disclosure includes:
(1) dissolving gold in the metal dissolving solution described above to obtain a composition containing the metal dissolving solution and dissolved gold;
(2) contacting the obtained composition with an adsorbent to allow the dissolved gold to be adsorbed by the adsorbent, thereby obtaining a gold-containing adsorbent; and
(3) separating the obtained gold-containing adsorbent and the composition to recover gold in the gold-containing adsorbent. The method for recovering gold of this embodiment may further include:
(4) further dissolving gold in a composition obtained after the gold-containing adsorbent is separated to reuse the metal dissolving solution in the composition.

According to the method for recovering gold of the present disclosure, gold can be easily dissolved by the metal dissolving solution, and gold dissolved in the metal dissolving solution can be recovered by a simple method of addition of the adsorbent. The method for recovering gold of the present disclosure can recover gold simply and efficiently. Furthermore, in this embodiment, gold can be further dissolved using the metal dissolving solution after the gold-containing adsorbent is separated. With this recovery method, in a gold recovery cycle including dissolution of gold and adsorption (recovery) of gold by the adsorbent, the metal dissolution system can be repeatedly used without separately performing a purification treatment, a regeneration treatment, or the like of the metal dissolving solution.

Hereinafter, the preferable first embodiment of the present disclosure will be described.

In the step of dissolving gold in the metal dissolving solution, a material containing gold is charged into the metal dissolving solution containing a hydrophilic organic solvent, a chlorine compound having a property of generating chloride ions (Cl⁻) by being dissolved in the hydrophilic organic solvent, and an oxidizing agent, and gold in the material is dissolved in the metal dissolving solution. The hydrophilic organic solvent, the chlorine compound, and the oxidizing agent described above regarding the metal dissolving solution are suitably used. When the metal dissolving solution contains halogen molecules as the oxidizing agent, the halide may be further included. The metal dissolving solution may further contain water or may not contain water.

Examples of the material containing gold include used electronic and electronic devices, components thereof, processing waste of ornaments, and waste catalysts. In addition, a semiconductor in which gold is used as a material of a bonding wire for connecting an electrode of an IC chip to a lead frame can be used as the material containing gold.

By dissolving gold in the metal dissolving solution, a composition containing the metal dissolving solution and dissolved gold is obtained. The composition is normally liquid and contains a hydrophilic organic solvent, a chlorine compound, an oxidizing agent, and dissolved gold. The gold concentration in the composition is not particularly limited, but for example, the gold concentration may be from 1 ppm to 2000 ppm, from 1 ppm to 1000 ppm, from 1 ppm to 500 ppm, from 1 ppm to 200 ppm, from 10 ppm to 2000 ppm, from 10 ppm to 1000 ppm, from 10 ppm to 500 ppm, from 10 ppm to 200 ppm, from 20 ppm to 2000 ppm, from 20 ppm to 1000 ppm, from 20 ppm to 500 ppm, or from 20 ppm to 200 ppm with respect to the total amount of the composition. The composition may further contain a reaction product derived from the oxidizing agent. The composition may further contain water or may not contain water. When the composition contains water, the amount of water in the composition may be from 0 mass% to less than 70 mass%, from 0 mass% to 50 mass%, or from 0 mass% to 20 mass%, with respect to the total amount of the composition. The composition containing water in the above range offers a high gold adsorption percentage by the adsorbent and offers excellent solubility of noble metals after the separation of the gold-containing adsorbent.

In the method for recovering gold of the present disclosure, by contacting the obtained composition with the adsorbent, gold dissolved in the composition can be adsorbed by the adsorbent. As a method for contacting the composition with the adsorbent, for example, the adsorbent may be charged into the composition to be mixed, or the composition may be allowed to pass through a column packed with the adsorbent. All gold dissolved in the composition may be adsorbed by the adsorbent, a part of the gold in the composition may be adsorbed by the adsorbent, or the gold not adsorbed by the adsorbent may remain in the composition.

The type of adsorbent is not particularly limited, and an adsorbent capable of selectively adsorbing gold in a composition containing an organic solvent is preferable. The adsorbent is usually solid and is preferably porous. The adsorbent in various forms such as powder, granule, and fiber can be used.

From the viewpoint of high gold adsorption efficiency, the preferable material of the adsorbent is at least one selected from the group consisting of cellulose derivatives, ion exchange resins, and activated carbon. As the material of the adsorbent, a cellulose derivative is more preferable.

In the present specification, the "cellulose derivative" is defined as a generic term for compounds in which various substituents are introduced into at least some of the hydroxyl groups in cellulose. A preferable cellulose derivative is a cellulose ester in which at least some of the hydroxyl groups in cellulose are esterified. A cellulose ester having a total degree of substitution of 0.8 or more and 2.9 or less is more preferable. From the viewpoint of being capable of selectively adsorbing gold, the total degree of substitution of the cellulose ester may be from 0.8 to 2.9, from 1.0 to 2.9, from 1.2 to 2.9, from 1.5 to 2.9, from 1.8 to 2.9, from 2.0 to 2.9, from 2.3 to 2.9, from 0.8 to 2.8, from 1.0 to 2.8, from 1.2 to 2.8, from 1.5 to 2.8, from 1.8 to 2.8, from 2.0 to 2.8, from 2.3 to 2.8, from 0.8 to 2.7, from 1.0 to 2.7, from 1.2 to 2.7, from 1.5 to 2.7, from 1.8 to 2.7, from 2.0 to 2.7, or from 2.3 to 2.7. The total degree of substitution of the cellulose ester is the sum of degrees of substitution at the 2-, 3-, and 6-positions of the glucose ring of the cellulose ester, and can be measured by the NMR method according to, for example, the method of Tezuka (Tezuka, Carbonydr. Res. 273, 83 (1995)).

The cellulose derivative is preferably a cellulose acylate in which at least some of the hydroxyl groups in cellulose are substituted with acyl groups having from 2 to 40 carbon atoms. The acyl group of the cellulose ester may have from 2 to 30, from 2 to 20, from 2 to 10, from 2 to 5, or from 2 to 3 carbon atoms. From the viewpoint of being capable of selectively adsorbing gold, the degree of substitution of the cellulose acylate with an acyl group may be from 0.8 to 2.9, from 1.0 to 2.9, from 1.2 to 2.9, from 1.5 to 2.9, from 1.8 to 2.9, from 2.0 to 2.9, from 2.3 to 2.9, from 0.8 to 2.8, from 1.0 to 2.8, from 1.2 to 2.8, from 1.5 to 2.8, from 1.8 to 2.8, from 2.0 to 2.8, from 2.3 to 2.8, from 0.8 to 2.7, from 1.0 to 2.7, from 1.2 to 2.7, from 1.5 to 2.7, from 1.8 to 2.7, from 2.0 to 2.7, or from 2.3 to 2.7. The degree of substitution of the cellulose acylate with an acyl group is the sum of degrees of acyl substitution at the 2-, 3-, and 6-positions of the glucose ring of cellulose ester, and can be determined in the same manner as in the measurement method described above for the total degree of substitution of the cellulose derivative.

The cellulose derivative is preferably a cellulose acetate in which at least some of the hydroxyl groups in cellulose are substituted with acetyl groups. A cellulose acetate having a degree of acetyl substitution of 0.8 or more and 2.9 or less is more preferable. From the viewpoint of being capable of selectively adsorbing gold, the degree of acetyl substitution of the cellulose acetate may be from 0.8 to 2.9, from 1.0 to 2.9, from 1.2 to 2.9, from 1.5 to 2.9, from 1.8 to 2.9, from 2.0 to 2.9, from 2.3 to 2.9, from 0.8 to 2.8, from 1.0 to 2.8, from 1.2 to 2.8, from 1.5 to 2.8, from 1.8 to 2.8, from 2.0 to 2.8, from 2.3 to 2.8, from 0.8 to 2.7, from 1.0 to 2.7, from 1.2 to 2.7, from 1.5 to 2.7, from 1.8 to 2.7, from 2.0 to 2.7, or from 2.3 to 2.7. The degree of acetyl substitution of the cellulose ester is the sum of degrees of acetyl substitution at the 2-, 3-, and 6-positions of the glucose ring of cellulose ester, and can be determined in the same manner as in the measurement method described above for the total degree of substitution of the cellulose derivative.

When the material of the adsorbent is a cellulose acetate, the cellulose acetate may contain an additional substituent besides the acetyl group as long as the effects of the present disclosure are obtained. Examples of the additional substituent include acyl groups such as a propionyl group, a butyryl group, a pentanoyl (valeryl) group, a hexanoyl group, a heptanoyl group, an octanoyl group, a nonanoyl group, an undecanoyl group, a dodecanoyl group, a tridecanoyl group, a tetradecanoyl (myristoyl) group, a pentadecanoyl group, a hexadecanoyl group, a heptadecanoyl group, and an octadecanoyl (stearoyl) group.

In the present specification, the "ion exchange resin" is defined as a resin that is composed of a crosslinked polymer having an ion exchange group and contains a counter ion exchangeable with a target ion. The type of ion exchange resin may be any type as long as ion exchange can be performed in the presence of an organic solvent, and can be appropriately selected depending on the type of the target ion. Examples of the ion exchange resin include polyolefin, a (meth)acrylic resin, a styrene-based resin, polyacetal, polyester, polycarbonate, polyamide, polyamide-imide, polyimide, polyether, polyetherimide, polyetherketone, polyether ether ketone, polysulfone, polyethersulfone, polyphenylene sulfide, and a fluororesin, each having an ion exchange group. Examples of the ion exchange group include a sulfonate group, a carboxyl group, a phosphate group, a primary amino group, a secondary amino group, a tertiary amino group, and a quaternary ammonium group. In particular, an anion exchange resin capable of exchanging negative ions is preferable.

As used herein, "activated carbon" is defined as a material consisting essentially of carbon and having a plurality of pores on its surface. The type of activated carbon is not particularly limited, and known and commercially available activated carbons can be appropriately selected and used regardless of the origin, the activation method, the shape, and the like. For example, the activated carbon may be activated carbon of mineral origin, may be activated carbon of plant origin, may be activated carbon of resin origin, may be steam-activated carbon, or may be chemical-activated carbon. The form of the activated carbon may be appropriately selected from a powdery form, a granular form, a crushed form, a fibrous form, a honeycomb form, and the like.

When the activated carbon is selected as the material of the adsorbent, the specific surface area of the activated carbon is preferably from 200 to 3500 m²/g, more preferably from 400 to 2000 m²/g, and still more preferably from 800 to 2000 m²/g. The total pore volume of the activated carbon is preferably from 0.1 to 2 ml/g, more preferably from 0.2 to 1.6 ml/g, and still more preferably from 0.2 to 0.8 ml/g.

The amount of the adsorbent added can be appropriately selected depending on the type of adsorbent. From the viewpoint of being capable of efficiently adsorbing gold, the amount of the adsorbent added may be from 1 g/L to 1000 g/L, from 1 g/L to 500 g/L, from 1 g/L to 300 g/L, from 1 g/L to 200 g/L, from 1 g/L to 100 g/L, from 2 g/L to 1000 g/L, from 2 g/L to 500 g/L, from 2 g/L to 300 g/L, from 2 g/L to 200 g/L, from 2 g/L to 100 g/L, from 5 g/L to 1000 g/L, from 5 g/L to 500 g/L, from 5 g/L to 300 g/L, from 5 g/L to 200 g/L, from 5 g/L to 100 g/L, from 10 g/L to 1000 g/L, from 10 g/L to 500 g/L, from 10 g/L to 300 g/L, from 10 g/L to 200 g/L, from 10 g/L to 100 g/L, from 15 g/L to 1000 g/L, from 15 g/L to 500 g/L, from 15 g/L to 300 g/L, from 15 g/L to 200 g/L, or from 15 g/L to 100 g/L with respect to the composition.

In the method for recovering gold of the present disclosure, by contacting the adsorbent with the composition, the dissolved gold in the composition is preferentially adsorbed by the adsorbent in principle. However, in rare cases, substances other than gold, derived from the oxidizing agent and the chlorine compound (for example, halogen ions such as chloride ions, halogen molecules, and the like), may be adsorbed. In this case, the adsorption of substances other than gold in the composition can be suppressed by allowing the target substance (oxidizing agent or chlorine compound-derived substance) to be adsorbed by the adsorbent before contacting the adsorbent with the composition. In addition, in the step described below, after the gold-containing adsorbent and the composition are separated, the corresponding substance (the oxidizing agent or chlorine compound-derived substance) may be replenished. In other words, the method for recovering gold of the present disclosure may further include allowing an oxidizing agent-derived substance and/or a chlorine compound-derived substance to be adsorbed by the adsorbent before contacting the composition with the adsorbent, and may include adding an oxidizing agent-derived substance and/or a chlorine compound-derived substance to the adsorbent before dissolving gold in the composition obtained after the gold-containing adsorbent is separated.

By contacting the composition with the adsorbent, a gold-containing adsorbent in which gold in the composition is adsorbed is obtained. The gold adsorbed by the gold-containing adsorbent can be recovered by separating this gold-containing adsorbent from the composition.

The method for separating the gold-containing adsorbent is not particularly limited, and a general solid-liquid separation method can be used. Examples of the solid-liquid separation method include filtration, centrifugation, and sedimentation. From the viewpoint of improving the recovery rate of gold and improving the reuse rate of the metal dissolving solution described below, a method in which the amount of the composition as a liquid component deposited on the gold-containing adsorbent separated as a solid content is small is preferable.

As the method for recovering gold from the gold-containing adsorbent, for example, gold may be released from the gold-containing adsorbent using a desorption liquid and the gold eluted in the desorption liquid may be recovered, or the gold-containing adsorbent may be incinerated to recover gold as an incineration residue. Examples of the method using the desorption liquid include a method of passing the desorption liquid through the gold-containing adsorbent packed in a column, and a method of charging the gold-containing adsorbent into the desorption liquid and stirring.

The type of desorption liquid can be selected according to the type of adsorbent. For example, in the case of an adsorbent made of a cellulose derivative, a preferable desorption liquid is water, an aqueous sodium chloride solution, or the like.

The composition obtained after the gold-containing adsorbent is separated (hereinafter, which may be referred to as "post-separation composition") contains a hydrophilic organic solvent, a chlorine compound having a property of generating chloride ions (Cl⁻) by being dissolved in the hydrophilic organic solvent, and an oxidizing agent. In other words, the composition obtained after the gold-containing adsorbent is separated contains the metal dissolving solution. The post-separation composition may contain gold that has not been adsorbed by the adsorbent. In other words, the post-separation composition may contain the metal dissolving solution and the dissolved gold.

The post-separation composition containing the metal dissolving solution can dissolve gold. According to the present disclosure, the metal dissolving solution in the composition can be reused for dissolving gold without performing a purification treatment or a regeneration treatment of the post-separation composition, or by only a simple treatment such as replenishment of a small amount of an additive (an oxidizing agent or a chlorine compound). That is, the method for recovering gold of the present disclosure includes: further dissolving gold in the composition obtained after the gold-containing adsorbent is separated to reuse the metal dissolving solution in the composition. According to the method for recovering gold of the present disclosure, repeating dissolving gold in the post-separation composition to obtain a composition containing dissolved gold, contacting the composition with an adsorbent to obtain a gold-containing adsorbent, separating the gold-containing adsorbent to obtain a post-separation composition, and further dissolving gold in the post-separation composition makes it possible to reuse the metal dissolving solution and to efficiently recover gold.

Preferably, the content of the hydrophilic organic solvent in the composition obtained after the gold-containing adsorbent is separated (hereinafter, referred to as "post-separation composition") may be 5 mass% or more and less than 100 mass%, from 5 mass% to 90 mass%, from 5 mass% to 80 mass%, from 5 mass% to 70 mass%, 10 mass% or more and less than 100 mass%, from 10 mass% to 90 mass%, from 10 mass% to 80 mass%, from 10 mass% to 70 mass%, 20 mass% or more and less than 100 mass%, from 20 mass% to 90 mass%, from 20 mass% to 80 mass%, from 20 mass% to 70 mass%, 25 mass% or more and less than 100 mass%, from 25 mass% to 90 mass%, from 25 mass% to 80 mass%, from 25 mass% to 70 mass%, 30 mass% or more and less than 100 mass%, from 30 mass% to 90 mass%, from 30 mass% to 80 mass%, or from 30 mass% to 70 mass%, with respect to the total amount of the post-separation composition. The post-separation composition containing the hydrophilic organic solvent in the above range offers excellent solubility of gold.

The content of the chlorine compound in the composition obtained after the gold-containing adsorbent is separated (post-separation composition) may be from 0.001 mass% to 10 mass%, from 0.001 mass% to 5 mass%, from 0.001 mass% to 1 mass%, from 0.005 mass% to 10 mass%, from 0.005 mass% to 5 mass%, from 0.005 mass% to 1 mass%, from 0.01 mass% to 10 mass%, from 0.01 mass% to 5 mass%, from 0.01 mass% to 1 mass%, from 0.05 mass% to 10 mass%, from 0.05 mass% to 5 mass%, or from 0.05 mass% to 1 mass%, with respect to the total amount of the post-separation composition. The noble metal dissolved in the post-separation composition containing the chlorine compound in the above range is efficiently adsorbed by the adsorbent. With the post-separation composition, an adsorbent can be used for recovering the dissolved noble metal.

The content of the oxidizing agent in the composition obtained after the gold-containing adsorbent is separated (post-separation composition) may be from 0.001 mass% to 20 mass%, from 0.001 mass% to 15 mass%, from 0.001 mass% to 10 mass%, from 0.01 mass% to 20 mass%, from 0.01 mass% to 15 mass%, from 0.01 mass% to 10 mass%, from 0.1 mass% to 20 mass%, from 0.1 mass% to 15 mass%, from 0.1 mass% to 10 mass%, from 0.5 mass% to 20 mass%, from 0.5 mass% to 15 mass%, or from 0.5 mass% to 10 mass%, with respect to the total amount of the post-separation composition. The post-separation composition containing the oxidizing agent in the above range is easily used for dissolving the noble metal and offers excellent solubility.

When the composition obtained after the gold-containing adsorbent is separated (post-separation composition) contains halogen molecules (X₂, X = I, Br, Cl, or the like) as an oxidizing agent, the post-separation composition may further contain a halide. When the post-separation composition contains a halide, the content of the halide may be from 0.001 mass% to 20 mass%, from 0.001 mass% to 15 mass%, from 0.001 mass% to 10 mass%, from 0.01 mass% to 20 mass%, from 0.01 mass% to 15 mass%, from 0.01 mass% to 10 mass%, from 0.1 mass% to 20 mass%, from 0.1 mass% to 15 mass%, from 0.1 mass% to 10 mass%, from 0.5 mass% to 20 mass%, from 0.5 mass% to 15 mass%, or from 0.5 mass% to 10 mass%, with respect to the total amount of the post-separation composition. In the post-separation composition containing the halide in the above range, the solubility of gold is maintained for a long period of time.

As long as the effects of the present disclosure are obtained, the composition obtained after the gold-containing adsorbent is separated (post-separation composition) may or may not contain water. When the post-separation composition contains water, the amount of water may be more than 0 mass% and less than 70 mass%, more than 0 mass% and 50 mass% or less, more than 0 mass% and 30 mass or less, more than 0 mass% and 20 mass% or less, 1 mass% or more and less than 70 mass%, 1 mass% or more and 50 mass% or less, 1 mass% or more and 30 mass or less, 1 mass% or more and 20 mass% or less, 5 mass% or more and less than 70 mass%, 5 mass% or more and 50 mass% or less, 1 mass% or more and 30 mass or less, or 1 mass% or more and 20 mass% or less, with respect to the total amount of the post-separation composition. The post-separation composition containing water in the above range offers excellent solubility of gold.

As the second embodiment of the method for recovering gold of the present disclosure, a composition containing a hydrophilic organic solvent, an oxidizing agent, a chlorine compound (that is, the metal dissolving solution of the present disclosure), and dissolved gold may be obtained by dissolving gold in a dissolving solution containing a hydrophilic organic solvent and an oxidizing agent, and then adding a chlorine compound before contacting it with an adsorbent. By contacting this composition with the adsorbent, such effects of the present disclosure that the gold can be efficiently recovered and the metal dissolving solution can be reused can be obtained.

That is, the method for recovering gold according to a second embodiment includes:
(1) preparing a dissolving solution containing a hydrophilic organic solvent and an oxidizing agent;
(2) dissolving gold in the dissolving solution to obtain a first composition containing the dissolving solution and the dissolved gold;
(3) adding, to the first composition, a chlorine compound that generates chloride ions (Cl⁻) by being dissolved in the hydrophilic organic solvent to obtain a second composition containing the above-described metal dissolving solution and the dissolved gold;
(4) contacting the second composition with an adsorbent to allow the dissolved gold to be adsorbed by the adsorbent, thereby obtaining a gold-containing adsorbent; and
(5) separating the gold-containing adsorbent and the second composition to recover gold in the gold-containing adsorbent. The method for recovering gold of this embodiment may further include:
(6) further dissolving gold in the second composition obtained after the gold-containing adsorbent is separated to reuse the metal dissolving solution in the second composition.

With respect to the types and amounts of the hydrophilic organic solvent, the oxidizing agent, and the chlorine compound in this embodiment, reference may be made to the contents described above for the first embodiment in the present specification.

### Examples

The present disclosure will be specifically described below with reference to examples, but the technical scope of the present disclosure is not limited by these examples. Unless otherwise specified, test temperatures are room temperatures.

### Example 1

### Preparation of metal dissolving solution

N-methylpyrrolidone (available from KANTO CHEMICAL CO., INC., weight percentage: 36%), iodine (I₂, available from KANTO CHEMICAL CO., INC., weight percentage: 3%), ammonium iodide (available from FUJIFILM Wako Pure Chemical Corporation, weight percentage: 7%), water (weight percentage: 50%), and sodium chloride (available from Tokyo Chemical Industry Co., Ltd., weight percentage: 4%) were mixed to prepare a metal dissolving solution (1). The composition of the metal dissolving solution (1) is listed in Table 1 below.

### Dissolution test

A gold wire (φ = 0.20 mm, purity: 99.95%, available from The Nilaco Corporation) was added to the obtained metal dissolving solution (1), thereby obtaining a composition (1) containing dissolved gold at a concentration of 1600 ppm. The amount of water and the concentration of dissolved gold in this composition (1) are described as "water (in composition)" and "initial gold concentration (M₁)", respectively, as listed in Table 1 below.

### Adsorption test

An adsorbent A (cellulose acetate, degree of acetyl substitution: 2.5) was added to the obtained composition (1) to adsorb gold dissolved in the composition (1). The amount of the adsorbent A added was 20 g (g/L) with respect to the composition (1). After stirring at room temperature for 3 hours, the adsorbent A on which gold had been adsorbed (gold-containing adsorbent) was subjected to solid-liquid separation, and the gold concentration in the liquid phase was measured. For the measurement of the gold concentration, an inductively coupled plasma optical emission spectrometer (product name "Agilent 5110", available from Agilent Technologies Japan, Ltd.) was used for the ICP emission spectrum. The gold adsorption percentage X (%) by the adsorbent was calculated by the following formula, where the gold concentration before adsorption was M₁ (ppm) and the gold concentration after adsorption was M₂ (ppm). The result is listed in Table 1 below as "gold adsorption percentage (%)". $X \left(wt%\right) = \left({M}_{1}\left(ppm\right)-{M}_{2}\left(ppm\right)\right) / {M}_{1} \left(ppm\right) \times 100$

### Redissolution test

After the adsorption test, the gold-containing adsorbent was separated, and then a composition (1') containing the metal dissolving solution was obtained. About 10 mg of a gold wire (Φ = 0.20 mm, purity: 99.95%, available from The Nilaco Corporation) was charged into the composition (1') and was immersed overnight. Then, the state of dissolution of gold in the composition (1') was visually observed. In Table 1 below, "○" in the column of "redissolution of gold wire" indicates that most of the charged gold wire was dissolved.

### Examples 2 and 3

The dissolution test, the adsorption test, and the redissolution test were performed in the same manner as in Example 1 except that the composition of the metal dissolving solution was changed to those listed in Table 1 below. The composition of the metal dissolving solution and the results of the adsorption test and the redissolution test are listed in Table 1 below. The amount of water and the concentration of dissolved gold in the composition (2) and the composition (3) obtained after the dissolution test are listed as "water (in composition)" and "initial gold concentration (M₁)", respectively, in Table 1 below.

### Example 4

The dissolution test, the adsorption test, and the redissolution test were performed in the same manner as in Example 1 except that an adsorbent B (anion exchange resin available from ORGANO CORPORATION) was used instead of the adsorbent A. The composition of the metal dissolving solution and the results of the adsorption test and the redissolution test are listed in Table 1 below. The amount of water and the concentration of dissolved gold in the composition (4) obtained after the dissolution test are listed as "water (in composition)" and "initial gold concentration (M₁)", respectively, in Table 1 below.

### Comparative Example 1

N-methylpyrrolidone (available from KANTO CHEMICAL CO., INC., weight percentage: 38%), iodine (I₂, available from KANTO CHEMICAL CO., INC., weight percentage: 3%), ammonium iodide (available from FUJIFILM Wako Pure Chemical Corporation, weight percentage: 7%), and water (weight percentage: 52%) were mixed to prepare a metal dissolving solution (C1). The composition of the metal dissolving solution is listed in Table 1 below.

The dissolution test was performed in the same manner as in Example 1 using the metal dissolving solution (C1). The amount of water and the concentration of dissolved gold in the obtained composition (C1) are listed as "water (in composition)" and "initial gold concentration (M₁)", respectively, in Table 1 below.

The adsorption test and the redissolution test were performed in the same manner as in Example 1 except that the obtained composition (C1) was used. The obtained results are listed in Table 1 below. In the adsorption test of Comparative Example 1, gold could not be recovered by the adsorbent. In the redissolution test, however, it was confirmed that the gold wire was dissolved after immersion overnight.

### Comparative Examples 2 and 3

A composition (C1) was obtained in the same manner as in Comparative Example 1. Water in the amount listed in Table 1 was added to the composition (C1) to obtain a composition (C2) having an amount of water of 84 wt.% and a gold concentration of 533 ppm and a composition (C3) having an amount of water of 70 wt.% and a gold concentration of 1000 ppm.

The adsorption test and the redissolution test were performed in the same manner as in Comparative Example 1 except that the composition (C2) and the composition (C3) were each used instead of the composition (C1). The composition of the metal dissolving solution and the results of the adsorption test and the redissolution test are listed in Table 1 below. The amount of water and the concentration of dissolved gold in the composition (C2) and the composition (C3) obtained after the dissolution test are listed as "water (in composition)" and "initial gold concentration (M₁)", respectively, in Table 1 below. In both of Comparative Examples 2 and 3, gold could not be recovered by the adsorbent, and, in the redissolution test, there was no change in the appearance of the gold wire even after immersion overnight.

### Example 5

The dissolution test, the adsorption test, and the redissolution test were performed in the same manner as in Example 1 except that water was not added to prepare a metal dissolving solution (5) having a composition listed in Table 1 below. The composition of the metal dissolving solution and the results of the adsorption test and the redissolution test are listed in Table 1 below. The amount of water and the concentration of dissolved gold in the composition (5) obtained after the dissolution test are listed as "water (in composition)" and "initial gold concentration (M₁)", respectively, in Table 1 below.

### Examples 6 and 7

The dissolution test, the adsorption test, and the redissolution test were performed in the same manner as in Example 1, except that a metal dissolving solution (6) and a metal dissolving solution (7) were prepared using acetonitrile (available from FUJIFILM Wako Pure Chemical Corporation) and methanol (available from FUJIFILM Wako Pure Chemical Corporation), respectively, instead of N-methylpyrrolidone. The composition of the metal dissolving solution and the results of the adsorption test and the redissolution test are listed in Table 1 below. The amount of water and the concentration of dissolved gold in the composition (6) and the composition (7) obtained after the dissolution test are listed as "water (in composition)" and "initial gold concentration (M₁)", respectively, in Table 1 below.

### Example 8

Acetonitrile (available from FUJIFILM Wako Pure Chemical Corporation, weight percentage: 36%), chlorine gas (Cl₂, weight percentage: 4%), trimethylamine hydrochloride (available from Tokyo Chemical Industry Co., Ltd., weight percentage: 10%), and water (weight percentage: 50%) were mixed to prepare a metal dissolving solution (8). The composition of the metal dissolving solution is listed in Table 1 below.

The dissolution test, the adsorption test, and the redissolution test were performed in the same manner as in Example 1 except that the metal dissolving solution (8) was used. The obtained results are listed in Table 1 below. The amount of water and the concentration of dissolved gold in the composition (8) obtained after the dissolution test are listed as "water (in composition)" and "initial gold concentration (M₁)", respectively, in Table 1 below. In Table 1, "TMA hydrochloride" represents trimethylamine hydrochloride.

### Example 9

In Example 9, a liquid passing test was performed instead of the adsorption test. The details are as described below.

### Preparation of metal dissolving solution

N-methylpyrrolidone (available from KANTO CHEMICAL CO., INC., weight percentage: 36%), iodine (I₂, available from KANTO CHEMICAL CO., INC., weight percentage: 3%), ammonium iodide (available from FUJIFILM Wako Pure Chemical Corporation, weight percentage: 7%), water (weight percentage: 50%), and sodium chloride (available from Tokyo Chemical Industry Co., Ltd., weight percentage: 4%) were mixed to prepare a metal dissolving solution (9). The composition of the metal dissolving solution (9) is the same as the composition of the metal dissolving solution (1) prepared in Example 1.

### Dissolution test

A gold wire (φ = 0.20 mm, purity: 99.95%, available from The Nilaco Corporation) was added to the obtained metal dissolving solution (9), thereby obtaining a composition (9) containing dissolved gold at a concentration of 1600 ppm. The amount of water in the composition (9) was 50 mass%.

### Liquid passing test

A column formed of glass (volume: 3.9 ml) was installed with the axial direction thereof being the vertical direction. Then, about 1.7 g of the adsorbent A (cellulose acetate, degree of acetyl substitution: 2.5) was packed from the bottom surface to the upper end of the column to prepare a packed column. A liquid having the same composition as that of the metal dissolving solution (9), which was separately prepared, was allowed to pass through the packed column at a liquid passing rate of 3.9 ml/h for 2 hours using a metering pump, whereby substances derived from the oxidizing agent and the chlorine compound in the liquid were adsorbed by the adsorbent A in the packed column.

Thereafter, the liquid passing was stopped and the liquid in the packed column was discharged. Then, the composition (9) was allowed to pass through the packed column at a liquid passing rate of 3.9 ml/h using a metering pump, and the liquid flowing out from the packed column was collected as a composition (9') containing a metal dissolving solution. 2.0 g of the composition (9') was collected, and the gold concentration in the liquid was measured in the same manner as in the adsorption test, to calculate the gold adsorption percentage by the adsorbent. The calculated gold adsorption percentage was 45%.

### Redissolution test

About 10 mg of a gold wire (Φ = 0.20 mm, purity: 99.95%, available from The Nilaco Corporation) was charged into the composition (9') collected in the liquid passing test and was immersed overnight. Then, the state of dissolution of gold in the composition (9') was visually observed. As a result, it was confirmed that most of the charged gold wire was dissolved in the composition (9').

### [Table 1]

**(Table 1)**

| | | Example 1 | Example 2 | Example 3 | Example 4 | Comparative Example 1 | Comparative Example 2 | Comparative Example 3 | Example 5 | Example 6 | Example 7 | Example 8 |
|---|---|---|---|---|---|---|---|---|---|---|---|---|
| Metal dissolving solution | | | | | | | | | | | | |
| Hydrophilic organic solvent | | | | | | | | | | | | |
| N-methylpyrrolidone | [wt%] | 36 | 37.7 | 37.86 | 36 | 38 | 38 | 38 | 76 | 0 | 0 | 0 |
| Acetonitrile | [wt%] | 0 | 0 | 0 | 0 | 0 | 0 | 0 | 0 | 36 | 0 | 36 |
| Methanol | [wt%] | 0 | 0 | 0 | 0 | 0 | 0 | 0 | 0 | 0 | 36 | 0 |
| Chlorine compound | | | | | | | | | | | | |
| NaCl | [wt%] | 4 | 0.4 | 0.04 | 4 | 0 | 0 | 0 | 4 | 4 | 4 | 0 |
| TMA hydrochloride | [wt%] | 0 | 0 | 0 | 0 | 0 | 0 | 0 | 0 | 0 | 0 | 10 |
| Oxidizing agent | | | | | | | | | | | | |
| I₂ | [wt%] | 3 | 2.9 | 2.9 | 3 | 3 | 3 | 3 | 6 | 3 | 3 | 0 |
| Cl₂ | [wt%] | 0 | 0 | 0 | 0 | 0 | 0 | 0 | 0 | 0 | 0 | 4 |
| Additional additive | | | | | | | | | | | | |
| Ammonium iodide | [wt%] | 7 | 6.8 | 6.8 | 7 | 7 | 7 | 7 | 14 | 7 | 7 | 0 |
| Water | [wt%] | 50 | 52.2 | 52.4 | 54 | 52 | 52 | 52 | 0 | 50 | 50 | 50 |

| Adsorption conditions | | | | | | | | | | | | |
|---|---|---|---|---|---|---|---|---|---|---|---|---|
| Adsorbent A (cellulose acetate) | [g/L] | 20 | 20 | 20 | 0 | 20 | 20 | 20 | 20 | 20 | 20 | 20 |
| Adsorbent B (ion exchange resin) | [g/L] | 0 | 0 | 0 | 20 | 0 | 0 | 0 | 0 | 0 | 0 | 0 |
| Number of adsorptions | [Number] | 1 | 1 | 1 | 1 | 1 | 1 | 1 | 1 | 1 | 1 | 1 |
| Metal dissolving solution | Part by mass | 100 | 100 | 100 | 100 | 100 | 100 | 100 | 100 | 100 | 100 | 100 |
| Amount of water added | Part by mass | 0 | 0 | 0 | 0 | 0 | 200 | 60 | 0 | 0 | 0 | 0 |
| Water (in composition) | [wt%] | 50 | 52.2 | 52.4 | 54 | 52 | 84 | 70 | 0 | 50 | 50 | 50 |
| Initial gold concentration (Mₗ) | [ppm] | 1600 | 1600 | 1600 | 1600 | 1600 | 533 | 1000 | 1600 | 100 | 100 | 100 |

| Evaluation results | | | | | | | | | | | | |
|---|---|---|---|---|---|---|---|---|---|---|---|---|
| Gold adsorption percentage | [%] | 6 | 4 | 2 | 6 | 0 | 0 | 0 | 2 | 6 | 6 | 2 |
| Redissolution of gold wire | - | ○ | ○ | ○ | ○ | ○ | × | × | ○ | ○ | ○ | ○ |

As listed in Table 1, with the metal dissolving solution of Examples, the dissolved noble metal could be efficiently recovered by the adsorbent. As described above for Example 9, it was confirmed that the dissolved noble metal could be recovered by the adsorbent even in the liquid passing test. Furthermore, it was confirmed that the noble metal could be dissolved even after the adsorption test and the liquid passing test.

On the other hand, in Comparative Examples 1 to 3 in which no chlorine compound was contained, the dissolved noble metal could not be recovered by the adsorbent.

As described above, the metal dissolving solutions of Examples are highly evaluated as compared with the metal dissolving solutions of Comparative Examples. From these evaluation results, the superiority of the present disclosure is clear.

### [Disclosed items]

Each of the following items discloses a preferred embodiment.

### [Item 1]

A metal dissolving solution containing:
a hydrophilic organic solvent;
a chlorine compound; and
an oxidizing agent,
wherein the chlorine compound has a property of generating chloride ions (Cl⁻) by being dissolved in the hydrophilic organic solvent.

### [Item 2]

The metal dissolving solution according to item 1, wherein the hydrophilic organic solvent is an organic solvent having a heteroatom.

### [Item 3]

The metal dissolving solution according to item 1 or 2, wherein the hydrophilic organic solvent is a polar solvent.

### [Item 4]

The metal dissolving solution according to any one of items 1 to 3, wherein the hydrophilic organic solvent is at least one selected from the group consisting of N-methylpyrrolidone, acetonitrile, and methanol.

### [Item 5]

The metal dissolving solution according to any one of items 1 to 4, wherein the chlorine compound is at least one selected from the group consisting of an alkali metal chloride, an alkaline earth metal chloride, and an amine hydrochloride.

### [Item 6]

The metal dissolving solution according to any one of items 1 to 5, wherein a content of the chlorine compound is from 0.001 mass% to 20 mass% with respect to a total amount of the metal dissolving solution.

### [Item 7]

The metal dissolving solution according to any one of items 1 to 6, further containing water, wherein an amount of the water is less than 70 mass% with respect to a total amount of the metal dissolving solution.

### [Item 8]

The metal dissolving solution according to any one of items 1 to 7, wherein the oxidizing agent is an iodine molecule (I₂) and/or a chlorine molecule (Cl₂).

### [Item 9]

The metal dissolving solution according to any one of items 1 to 8, wherein the oxidizing agent is an iodine molecule (I₂), and the metal dissolving solution further comprises
an iodine compound.

### [Item 10]

The metal dissolving solution according to item 9, wherein the iodine compound is at least one selected from the group consisting of an alkali metal iodide, an alkaline earth metal iodide, and an ammonium iodide.

### [Item 11]

The metal dissolving solution according to any one of items 1 to 10, which is used for semiconductor manufacturing.

### [Item 12]

A method for recovering gold, the method including:
dissolving gold in the metal dissolving solution according to any one of items 1 to 10 to obtain a composition containing the metal dissolving solution and dissolved gold;
contacting the composition with an adsorbent to allow the dissolved gold to be adsorbed by the adsorbent, thereby obtaining a gold-containing adsorbent; and
separating the gold-containing adsorbent and the composition to recover gold in the gold-containing adsorbent.

### [Item 13]

A method for recovering gold, the method including:
dissolving gold in the metal dissolving solution according to any one of items 1 to 10 to obtain a composition containing the metal dissolving solution and dissolved gold;
contacting the composition with an adsorbent to allow the dissolved gold to be adsorbed by the adsorbent, thereby obtaining a gold-containing adsorbent;
separating the gold-containing adsorbent and the composition to recover gold in the gold-containing adsorbent; and
further dissolving gold in a composition obtained after the gold-containing adsorbent is separated to reuse the metal dissolving solution in the composition.

### [Item 14]

The method for recovering gold according to item 12 or 13, wherein a material of the adsorbent is at least one selected from the group consisting of a cellulose derivative, an ion exchange resin, and activated carbon.

### [Item 15]

The method for recovering gold according to item 14, wherein the cellulose derivative is a cellulose ester having a total degree of substitution of 0.8 or more and 2.9 or less.

### [Item 16]

The method for recovering gold according to item 14 or 15, wherein the cellulose derivative is a cellulose acetate in which at least some of hydroxyl groups in cellulose are substituted with acetyl groups.

### Industrial Applicability

The metal dissolving solution described above can be used for recovery of noble metals other than gold, in addition to recovery of gold from used equipment. The metal dissolving solution can also be applied to an etching liquid for various noble metals.

## Claims

1. A metal dissolving solution comprising:
a hydrophilic organic solvent;
a chlorine compound; and
an oxidizing agent,
wherein the chlorine compound has a property of generating chloride ions (Cl⁻) by being dissolved in the hydrophilic organic solvent.

2. The metal dissolving solution according to claim 1, wherein the hydrophilic organic solvent is an organic solvent having a heteroatom.

3. The metal dissolving solution according to claim 1, wherein the hydrophilic organic solvent is a polar solvent.

4. The metal dissolving solution according to claim 1, wherein the hydrophilic organic solvent is at least one selected from the group consisting of N-methylpyrrolidone, acetonitrile, and methanol.

5. The metal dissolving solution according to claim 1, wherein the chlorine compound is at least one selected from the group consisting of an alkali metal chloride, an alkaline earth metal chloride, and an amine hydrochloride.

6. The metal dissolving solution according to claim 1, wherein a content of the chlorine compound is from 0.001 mass% to 20 mass% with respect to a total amount of the metal dissolving solution.

7. The metal dissolving solution according to claim 1, further comprising water, wherein an amount of the water is less than 70 mass% with respect to a total amount of the metal dissolving solution.

8. The metal dissolving solution according to claim 1, wherein the oxidizing agent is an iodine molecule (I₂) and/or a chlorine molecule (Cl₂).

9. The metal dissolving solution according to claim 1, wherein the oxidizing agent is an iodine molecule (I₂), and the metal dissolving solution further compraisesan iodine compound.

10. The metal dissolving solution according to claim 9, wherein the iodine compound is at least one selected from the group consisting of an alkali metal iodide, an alkaline earth metal iodide, and an ammonium iodide.

11. The metal dissolving solution according to claim 1, which is used for semiconductor manufacturing.

12. A method for recovering gold, the method comprising:
dissolving gold in the metal dissolving solution according to claim 1 to obtain a composition containing the metal dissolving solution and dissolved gold;
contacting the composition with an adsorbent to allow the dissolved gold to be adsorbed by the adsorbent, thereby obtaining a gold-containing adsorbent; and
separating the gold-containing adsorbent and the composition to recover gold in the gold-containing adsorbent.

13. A method for recovering gold, the method comprising:
dissolving gold in the metal dissolving solution according to claim 1 to obtain a composition containing the metal dissolving solution and dissolved gold;
contacting the composition with an adsorbent to allow the dissolved gold to be adsorbed by the adsorbent, thereby obtaining a gold-containing adsorbent;
separating the gold-containing adsorbent and the composition to recover gold in the gold-containing adsorbent; and
further dissolving gold in a composition obtained after the gold-containing adsorbent is separated to reuse the metal dissolving solution in the composition.

14. The method for recovering gold according to claim 12 or 13, wherein a material of the adsorbent is at least one selected from the group consisting of a cellulose derivative, an ion exchange resin, and activated carbon.

15. The method for recovering gold according to claim 14, wherein the cellulose derivative is a cellulose ester having a total degree of substitution of 0.8 or more and 2.9 or less.

16. The method for recovering gold according to claim 14, wherein the cellulose derivative is a cellulose acetate in which at least some of hydroxyl groups in cellulose are substituted with acetyl groups.
